# EUROPEAN PATENT SPECIFICATION

(11) **EP 4 633 859 B1**
(45) Date of publication and mention of the grant of the patent: **02.12.2026**
(21) Application number: 23809288.6
(22) Date of filing: 13.11.2023
(51) Int. Cl.: B23K 15/00, B23K 15/06

(54) **A WELDING SYSTEM WITH X-RAY IMAGING OF WELDS**
SCHWEISSSYSTEM MIT RÖNTGENBILDGEBUNG VON SCHWEISSNÄHTEN
SYSTÈME DE SOUDAGE À IMAGERIE PAR RAYONS X DE SOUDURES

(30) Priority: 12.12.2022 GB 202218623
(43) Date of publication of application: 22.10.2025
(73) Proprietor: Aquasium Technology Limited, Cambridge, Cambridgeshire CB25 9QX (GB)
(72) Inventor: O'FARRELL, Alex, Cambridge Cambridgeshire CB25 9QX (GB)
(74) Representative: Sharrock, Daniel John
(86) International application number: PCT/GB2023/052961
(87) International publication number: WO 2024/126970

(56) References cited:
- US-A- 3 974 381

## Description

### Field of the Invention

This invention relates to a welding system with X-ray imaging of welds, in particular to enable monitoring of the quality of welded joints.

### Background to the Invention

When welding joints using high energy power sources such as electron beams, issues arise with weld quality during the welding process. Penetration depth of the weld can vary and porosity can be exhibited within the cooled joint. Imaging of welds has been undertaken using an X-ray source transmitting X-rays through the completed weld but issues arise with resolution of the welded area and thus determining the characteristics and extent of flaws within the weld.

US3,974,381 describes a welding method and apparatus for detecting the penetration depth of an electron beam weld, in which X-rays which occur are guided through several plates of an absorption device to a ray receiver.

### Summary of the Invention

In accordance with the invention, there is provided a welding system as defined in claim 1.

Location of the input element of an X-ray detector proximal the front portion of the connection interface so as to detect X-rays emitted during welding allows for ready detection of the image penetration depth of a weld joining the two bodies together. In addition, the second detector comprising a second input element located proximal the rear portion of the connection interface allows for imaging of porosity in a completed weld.

Preferably the electron beam gun generates an electron beam which travels along the connection interface from the rear portion to the front portion and so travels towards the input element.

The at least one detector may comprise a photodiode, or an array of sensing elements such as found in an X-ray camera.

Preferably the second detector comprises a photodiode, or an array of sensing elements such as found in an X-ray camera.

The or each input element is preferably located within the welding chamber and may comprise a pinhole fiber-optic input. Alternatively the or each input element may be external to the welding chamber, proximal a window transparent to X-rays.

The or each detector may be connected to a data processor configured to act on a beam deflection system and so control properties and direction and speed of travel of the electron beam generated by the electron beam gun.

The or each detector may be connected to a data processor configured to act on a controller to adjust movement of the bodies during welding.

The invention will now be described, by way of example, with reference to the accompanying drawings in which:
Figure 1 is a schematic diagram of a welding system used to acquire X-ray images of a weld joint;
Figure 2 is a schematic diagram of welding during acquisition of X-ray images;
Figure 3 is an example X-ray image obtained by imaging from the front of a welded joint; and
Figure 4 is an example X-ray image obtained by imaging from the rear of a welded joint.

### Description

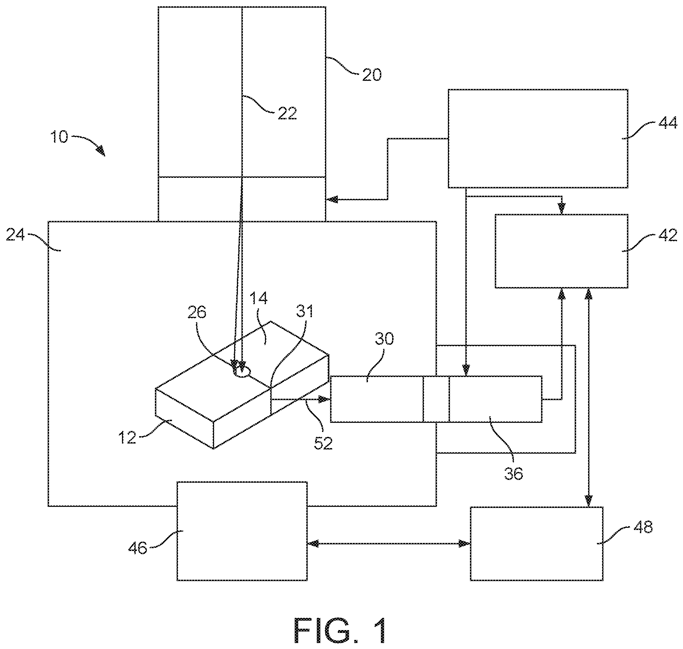

A schematic diagram of a welding system 10 with two parts or bodies 12, 14 to be welded together is shown in Figure 1 where electron beam gun 20 generates an electron beam 22 within a vacuum chamber 24. Beam 22 is moved along connection interface 26 between adjoining parts 12, 14 creating a keyhole weld with a width of around 300 to 600µm. Typically beam 22 moves in a raster pattern, scanning across interface 26 in a direction perpendicular to the direction of travel of beam 22 along interface 26.

A pinhole fiber-optic input 30 located within vacuum chamber 24 proximal a front end 31 of interface 26 detects X-rays generated by the incidence of electron beam 22 onto the materials 12, 14 being welded. Input 30 is connected to an image detector 36, such as a single photodiode, an array of sensing elements, or an X-ray camera, preferentially located outside vacuum chamber 24.

Using a fibre-optic or other small pinhole-like input allows input 30 to be located close to interface 26 and for multiple switchable inputs to be used if necessary to ensure speed and ease of image acquisition. Optionally, an apertured shim can be positioned in front of input 30 to provide protection from welding debris.

X-ray camera 36 comprises a high-speed scintillator and image acquisition electronics. X-ray images detected by camera 36 generate image data which is processed within processor 42. Processed data from processor 42 is passed to deflection control system 44 which alters the direction and focus of electron beam 22, moving beam 22 along interface 26, and controls time of acquisition of images by camera 36. A motor encoder 46 and CNC controller 48 are also connected to processor 42 so that data can be transferred bi-directionally to provide, if required, active control of the movement of bodies 12, 14 during weld creation and image detection.

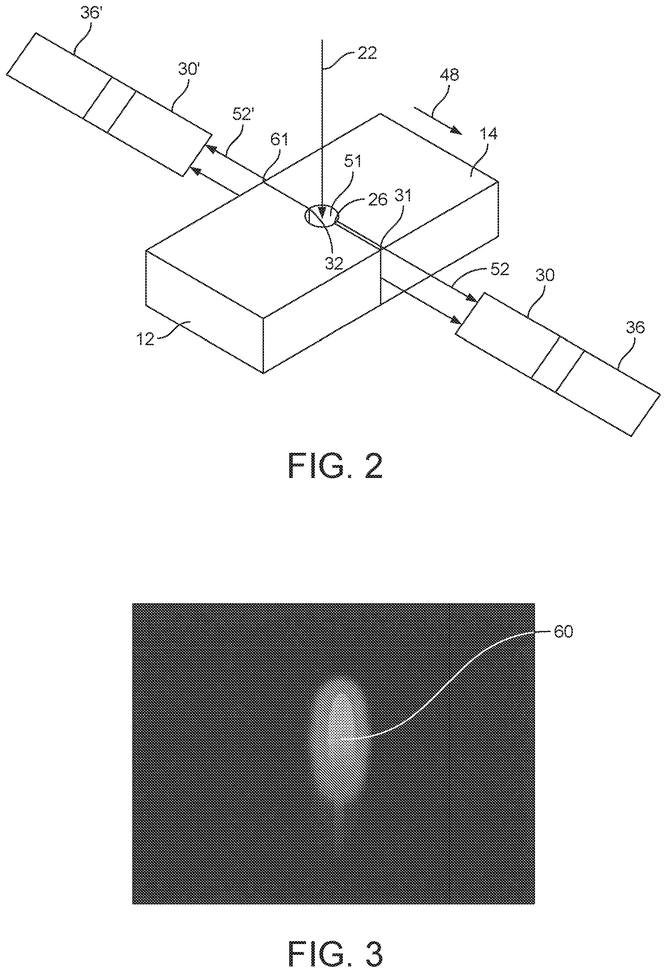

Figure 2 shows parts 12, 14 in more detail. During welding, which typically takes place at voltages of around 36 to 170 kV, electron beam 22 is controlled by system 44 to move in the direction of arrow 48 along a path defined by connection interface 26. Input 30 to X-ray camera 36 is positioned perpendicular to weld beam 22 and in line with interface 26, so as to image along connection interface 26 where parts 12, 14 abut but are not yet conjoined by welding. Beam 22 is shown travelling in the direction of arrow 48 moving from the rear of interface 26 towards the position where input 30 is located proximal front end 31. For a flat, substantially two-dimensional part, camera 36 is positioned just above the surface of the part, again imaging interface 26.

As electron beam 22 impinges on parts 12, 14, a melt pool 51 is created which solidifies to form weld 32 joining parts 12 and 14. X-rays 52, 52' are generated within and emitted from melt pool 51 between parts 12, 14 and by positioning input 30 proximal front end 31 at a position ahead of weld joint 32, X-ray images can be obtained from the front of welded joint 32. This produces an image 60 such as shown in Figure 3 which allows penetration depth of weld joint 32 to be measured and monitored. Detection of any variation in the weld penetration depth can be used to trigger a process alarm so that weld imperfections can be addressed. If desired, the linear position of beam 22 along joint 32 or the motor position can be logged when a process alarm is triggered and so identify areas that might require ultrasonic inspection after welding has been completed.

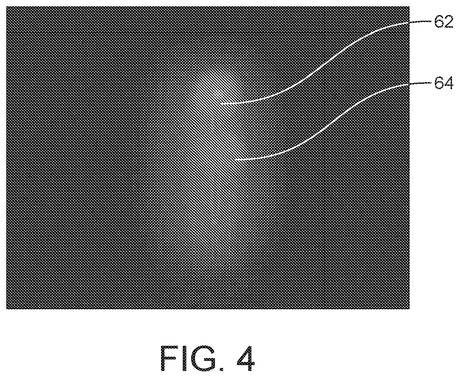

If desired, a second X-ray camera 36' with associated input 30' can be positioned at rear 61 of interface 26 to image the completed weld. Some of the X-rays generated from melt pool 51 will travel through the completed weld 32 towards input 30' and this allows regions of porosity in the finished weld to be identified, see Figure 4 where top spot 62 represents the weld location and bottom spot 64 indicates porosity is present in the weld. Given X-rays are generated proximal the region where beam 22 is incident, the X-ray images produced as beam 22 travels along interface 26 provide a succession of images along the length of the weld joint, enabling the full length of weld joint 32 to be imaged.

Using cameras to the rear and front of interface 26 allows active monitoring of both weld penetration and porosity as weld 32 is being formed.

The resolution of the X-ray image is limited by the response time of the scintillator within cameras 36, 36' with a high-speed scintillator typically having a response time of less than 100ns and so enabling resolutions of greater than 50x50 pixels. FPGA closed loop image processing can be used to control the weld process, monitoring the acquired images to determine when the weld has been completed, and allowing monitoring of beam penetration at the weld site so that welding beam power can be increased to achieve the required melting.

## Claims

1. A welding system (10) comprising an electron beam gun (20), and at least one detector (36) for acquiring X-ray images of at least two bodies (12, 14) to be welded together, the bodies adjoining along a connection interface (26) defining a path along which welding takes place,
**characterised in that**
the system includes an evacuatable welding chamber (24),
the electron beam gun is connected to the welding chamber,
the connection interface (26) has a front portion (31) and a rear portion (61),
the at least one detector comprises an input element (30) located proximal the front portion of the connection interface so as to detect X-rays emitted during welding, and
the system further includes a second detector (36') for acquiring X-ray images, the second detector comprising a second input element (30') located proximal the rear portion of the connection interface.

2. A welding system according to claim 1, wherein the electron beam gun (20) generates an electron beam (22) which travels along the connection interface (26) from the rear portion (61) to the front portion (31).

3. A welding system according to claim 1 or claim 2, wherein the at least one detector comprises an X-ray camera (36).

4. A welding system according to any of the preceding claims, wherein the second detector comprises an X-ray camera (36').

5. A welding system according to any of the preceding claims, wherein the or each input element (30, 30') is located within the welding chamber (24).

6. A welding system according to any of claims 1 to 4, wherein the or each input element (30, 30') is external to the welding chamber (24), proximal a window transparent to X-rays.

7. A welding system according to any of claims 4 to 6, wherein the or each input element (30, 30') is a pinhole fiber-optic input.

8. A welding system according to any of the preceding claims, wherein the or each detector (36, 36') is connected to a data processor (42) configured to act on a beam deflection system.

9. A welding system according to any of the preceding claims, wherein the or each detector (36, 36') is connected to a data processor (42) configured to act on a controller (48) to adjust movement of the bodies (12, 14) during welding.

## Patentansprüche

1. Schweißsystem (10), das eine Elektronenstrahlkanone (20) und mindestens einen Detektor (36) zum Erfassen von Röntgenbildern von mindestens zwei miteinander zu verschweißenden Körpern (12, 14) umfasst, wobei die Körper entlang einer Verbindungsschnittstelle (26) angrenzen und einen Pfad definieren, entlang dessen das Verschweißen stattfindet,
**dadurch gekennzeichnet, dass**
das System eine evakuierbare Schweißkammer (24) umfasst, die Elektronenstrahlkanone mit der Schweißkammer verbunden ist,
die Verbindungsschnittstelle (26) einen vorderen Abschnitt (31) und einen hinteren Abschnitt (61) aufweist,
der mindestens eine Detektor ein Eingangselement (30) umfasst, das proximal zu dem vorderen Abschnitt der Verbindungsschnittstelle angeordnet ist, um während des Schweißens emittierte Röntgenstrahlen zu detektieren, und
das System ferner einen zweiten Detektor (36') zum Erfassen von Röntgenbildern umfasst, wobei der zweite Detektor ein zweites Eingangselement (30') umfasst, das proximal zu dem hinteren Abschnitt der Verbindungsschnittstelle angeordnet ist.

2. Schweißsystem nach Anspruch 1, wobei die Elektronenstrahlkanone (20) einen Elektronenstrahl (22) erzeugt, der sich entlang der Verbindungsschnittstelle (26) von dem hinteren Abschnitt (61) zu dem vorderen Abschnitt (31) bewegt.

3. Schweißsystem nach Anspruch 1 oder Anspruch 2, wobei der mindestens eine Detektor eine Röntgenkamera (36) umfasst.

4. Schweißsystem nach einem der vorhergehenden Ansprüche, wobei der zweite Detektor eine Röntgenkamera (36') umfasst.

5. Schweißsystem nach einem der vorhergehenden Ansprüche, wobei sich das oder jedes Eingangselement (30, 30') innerhalb der Schweißkammer (24) befindet.

6. Schweißsystem nach einem der Ansprüche 1 bis 4, wobei sich das oder jedes Eingangselement (30, 30') außerhalb der Schweißkammer (24) proximal zu einem für Röntgenstrahlen transparenten Fenster befindet.

7. Schweißsystem nach einem der Ansprüche 4 bis 6, wobei das oder jedes Eingangselement (30, 30') ein faseroptischer Pinhole-Eingang ist.

8. Schweißsystem nach einem der vorhergehenden Ansprüche, wobei der oder jeder Detektor (36, 36') mit einem Datenprozessor (42) verbunden ist, der dazu ausgelegt ist, auf ein Strahlablenkungssystem zu wirken.

9. Schweißsystem nach einem der vorhergehenden Ansprüche, wobei der oder jeder Detektor (36, 36') mit einem Datenprozessor (42) verbunden ist, der dazu ausgelegt ist, auf eine Steuerung (48) zu wirken, um die Bewegung der Körper (12, 14) während des Schweißens anzupassen.

## Revendications

1. Système de soudage (10) comprenant un canon à faisceau d'électrons (20), et au moins un détecteur (36) pour acquérir des images radiologiques d'au moins deux corps (12, 14) à souder, les corps jouxtant une interface de liaison (26) définissant un chemin le long duquel le soudage a lieu,
**caractérisé en ce que**
le système comprend une chambre de soudage (24) pouvant être mise sous vide,
le canon à faisceau d'électrons est relié à la chambre de soudage,
l'interface de liaison (26) comprend une partie avant (31) et une partie arrière (61),
le ou les détecteurs comprennent un élément d'entrée (30) situé à proximité de la partie avant de l'interface de liaison de façon à détecter les rayons X émis lors du soudage, et
le système comprend en outre un second détecteur (36') destiné à acquérir des images radiologiques, le second détecteur comprenant un second élément d'entrée (30') situé à proximité de la partie arrière de l'interface de liaison.

2. Système de soudage selon la revendication 1, dans lequel le canon à faisceau d'électrons (20) génère un faisceau d'électrons (22) qui se déplace le long de l'interface de liaison (26) de la partie arrière (61) à la partie avant (31).

3. Système de soudage selon la revendication 1 ou la revendication 2, dans lequel le ou les détecteurs comprennent une caméra à rayons X (36).

4. Système de soudage selon l'une quelconque des revendications précédentes, dans lequel le second détecteur comprend une caméra à rayons X (36').

5. Système de soudage selon l'une quelconque des revendications précédentes, dans lequel le ou chaque élément d'entrée (30, 30') est situé à l'intérieur de la chambre de soudage (24).

6. Système de soudage selon l'une quelconque des revendications 1 à 4, dans lequel le ou chaque élément d'entrée (30, 30') est extérieur à la chambre de soudage (24), à proximité d'une fenêtre transparente aux rayons X.

7. Système de soudage selon l'une quelconque des revendications 4 à 6, dans lequel le ou chaque élément d'entrée (30, 30') est une entrée à fibre optique à sténopé.

8. Système de soudage selon l'une quelconque des revendications précédentes, dans lequel le ou chaque détecteur (36, 36') est connecté à un processeur de données (42) configuré pour agir sur un système de déviation de faisceau.

9. Système de soudage selon l'une quelconque des revendications précédentes, dans lequel le ou chaque détecteur (36, 36') est connecté à un processeur de données (42) configuré pour agir sur un contrôleur (48) pour ajuster le mouvement des corps (12, 14) pendant le soudage.
